# EUROPEAN PATENT APPLICATION

(11) **EP 1 142 671 A1**
(43) Date of publication of application: **10.10.2001**
(21) Application number: 01500072.2
(22) Date of filing: 20.03.2001
(51) Int. Cl.: B24B 41/02, B24B 27/00, B23Q 1/01

(54) **Double column grinding machine**

(30) Priority: 07.04.2000 ES 200000896
(71) Applicant: Danobat, S. Coop., 20870 Elgoibar (Guipuzcoa) (ES)
(72) Inventor: Aznal Izaguirrre, Salvador, 20820 Deba (ES)

(57) **Abstract**

A grinding machine (1) that comprises two aligned columns (2,3), each of said columns (2,3) being provided with one wheelhead (4,5) with its respective grinding wheels (6,7). The columns (2,3) slide over a base (9) common to both and parallel to at least one machining table (11), each of the wheelheads (4,5) has its own vertical drive system and its own transverse drive system and both grinding wheels (6,7) may work simultaneously.

## Description

### TECHNICAL FIELD

The present invention relates to machines for grinding workpieces, and more specifically to machines for grinding such workpieces as frames, columns, tables, etc.

### PRIOR ART

The grinding of workpieces of variable height and length such as frames, columns, tables, etc. requires the use of two different types of wheelheads: tangential wheelheads and anglemovement wheelheads (so-called universal wheelheads).

The use of conventional single-column flat grinders for grinding workpieces of this type is already known. For this purpose, besides using the wheel mounted on this column, another carriage with another wheel is fitted to the side of the grinding machine column, generally possessing angle movement. The machining table moves in relation to the column during the grinding process.

The conventional grinding machine has the following disadvantages:
- It cannot work with the two wheels at the same time, as the vertical drive is common to both wheels.
- It has a single machining table, so it is necessary to install costly palletizing systems alongside it for change of workpiece. In addition, the machine has to be shut off while the palletizing system is working, with the consequent increase in time during the grinding process.

The use of bridge grinders for this purpose is also known. Bridge grinders are grinding machines with two opposing columns, one on either side of the machining table, and linked transversely by a cross rail. The cross rail mounts two wheelheads - one of them generally capable of angle movementeach of them with its own vertical drives and its own transverse drives (up to a limited travel), the cross rail that links both columns being fixed or vertically movable. During the grinding process the machining table moves in respect of the columns and the bridge. These machines are suitable for grinding workpieces of considerable width and variable lengths.

The use of a bridge grinding machine has the following disadvantages:
- It cannot work with both wheels at the same time, as, although the grinding wheels have their own drive carriages, the actual machine frame with the cross rail prevents the wheels from working at the same time as they would have to cross over (the transverse movement of both wheelheads is effected on a single support bracket).
- It requires costly palletizing systems for changing workpieces or high-priced dual table systems, with a dual table actuating system or table hitch and release systems, besides the fact that workpiece change means that it is alternately on each side of the machine.
- Taking into account the workpiece change system, it occupies a tremendous amount of shop floor space.
- It has a high cost.

### DISCLOSURE OF THE INVENTION

The object of the invention is to provide a grinder with simultaneous grinding with two different wheels, as is defined in the claims.

The grinding machine that is the object of the invention comprises at least two aligned columns on one side of the machining table or tables on which the workpieces to be ground are placed, each of said columns being provided with a wheelhead with its respective grinding wheel. Each one of said wheelheads has its own vertical and horizontal drive system, at least one of said wheelheads is capable of angle movement, and both wheels work simultaneously. It is the columns that move in relation to the machining table or tables.

The machine of the present invention offers the following advantages:
- As the two wheels work simultaneously, output is practically doubled. In fact, the total grinding time is the grinding time of the wheel which has the longer process, as the grinding time of the other wheel is comprised in this.
- Since it is the columns that move and the heads have all their movements in relation to said columns, the grinding machine can grind workpieces placed on different aligned machining tables consecutively. Thus, the machine can be grinding the workpiece of one machining table, while the operator handles the workpiece of another table. In this way, the workpiece change time is nil.
- Taking into account the automatic workpiece change, the space occupied by the machine is smaller than that of a bridge machine and even less than a conventional grinding machine, as the latter requires palletizing systems.
- There is a considerable saving in costs especially in relation to the use of a bridge machine.

### DESCRIPTION OF THE DRAWINGS

FIG. 1 is an elevational view of an embodiment of the machine that is the object of the invention.

FIG. 2 is a profile view of the machine that is the object of the invention according to section II-II of FIG. 1.

FIG. 3 is a profile view of the machine that is the object of the invention according to section III-III of FIG. 1.

### DETAILED DISCLOSURE OF THE INVENTION

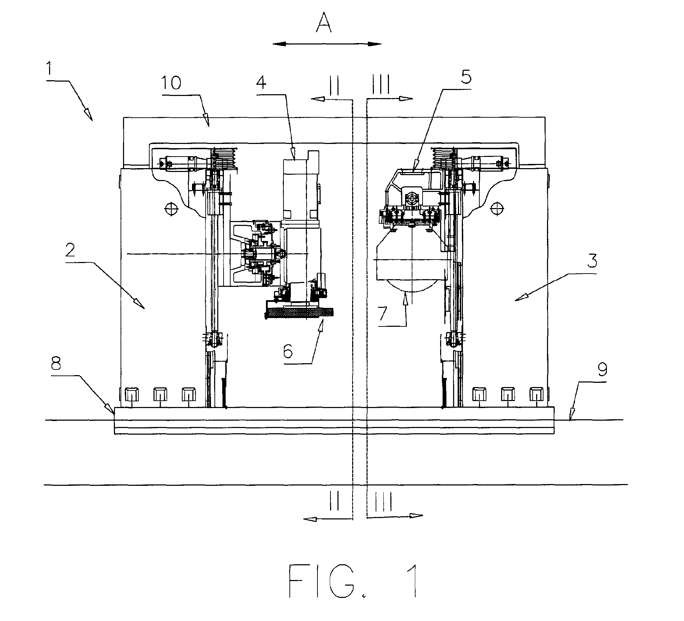

With reference to FIG. 1, the machine 1 of the invention has two facing and aligned columns 2 and 3, column 2 being provided with a wheelhead 4 and a grinding wheel 6 and column 3 being provided with a wheelhead 5 and a grinding wheel 7. Both wheelhead 4 and wheelhead 5 have their own vertical drive system and their own horizontal drive system and can work simultaneously.

In the embodiment of FIG.1 the wheelhead 5 only has tangential movement, while the wheelhead 4 is capable of being moved in an angular direction as well.

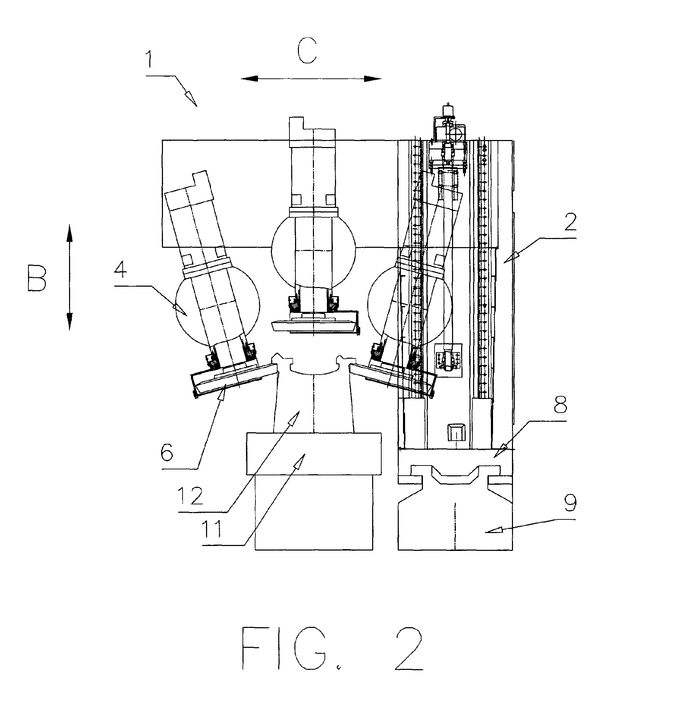

FIG. 2 shows the column 2 together with the wheelhead 4 with its respective grinding wheel 6. FIG. 2 shows said head 4 in three different positions. Wheelhead 4 has a vertical drive according to direction B and a horizontal drive according to direction C. It may be seen that the possibility of angle movement possessed by the wheelhead 4 permits the grinding of workpieces of widely varying shapes, such as workpiece 12 for instance. Column 2 is linked to carriage 8, which slides over base 9.

Wheelhead 4 is a so-called universal wheelhead, as it is used in other types of machine and has all the movements possessed by wheelheads of this type.

The workpiece 12 for grinding is placed on a fixed machining table 11 (the machine 1 may have more than one machining table 11). The workpieces 12 to be ground are bulky items of considerable length, not usually more than one metre wide, such as frames, columns, tables, etc for machine tools.

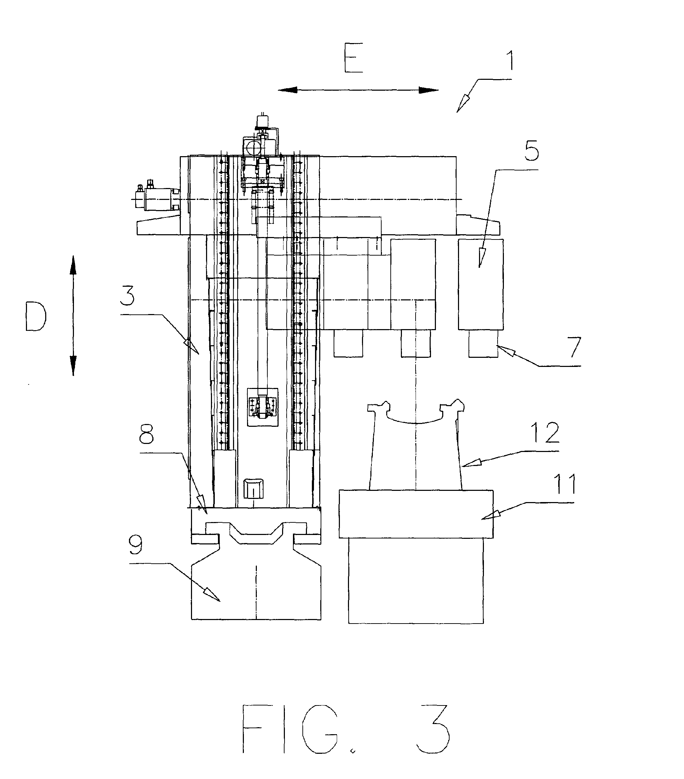

With reference to FIG.3, the wheelhead 5 of this embodiment grinds horizontal flat surfaces. FIG. 3 shows said wheelhead 5 in three different positions. The movements that said wheelhead 5 has in relation to the column 3 are the usual ones possessed by the wheelheads on flat surface grinding machines. Thus, said wheelhead 5 has a vertical drive according to direction D and a horizontal drive according to direction E.

Grinding wheels 4 and 5 are large diameter wheels (up to 600 mm) and have high-power servomotors. The grinding with both wheels is carried out at the same time with a single numeric control that works in two channels with specific software.

Columns 2 and 3 of machine 1 are linked at the bottom to a single lengthwise carriage 8 which slides longitudinally over base 9 according to direction A, as shown in FIG. 1. This movement is effected by means of a hydrostatic slideway so as to be able to reach typical conventional grinding speeds (30 m/min).

The hydrostatic slideway enables considerable accelerations and decelerations to be achieved and, furthermore, it ensures that the movement of the columns is uniform, thus preventing the appearance of a buckling effect in said columns. In the embodiment of FIG. 1 columns 2 and 3 are linked at the top by means of a cross member 10 to prevent said buckling effect. With the use of a hydrostatic slideway, said cross member 10 is not necessary.

The longitudinal movement of carriage 8 is governed, for instance, by a rack and pinion and encoder system.

As the assembly formed by carriage 8, columns 2 and 3 and their respective wheelheads 4 and 5 move en bloc on base 9, it is possible to install various aligned machining tables 11, each with its respective workpiece 12, along the whole length of the base 9 and parallel to said base 9. This means that the machine 1 may be grinding workpiece 12 of one machining table 11, while the operator is handling the workpiece 12 of another table 11.

## Claims

1. A grinding machine for grinding bulky workpieces (12) of considerable length, such as frames, columns, tables, etc., which comprises:
- at least one machining table (11) on which the workpiece (12) to be ground is placed,
- at least two wheelheads (4,5) with their respective wheels (6,7) for grinding the workpiece (12), one of the wheelheads (4,5) having the angle movement capability,
**characterised in that**
it comprises at least two columns (2,3) aligned on one side of said machining table (11), said columns (2,3) being linked at the bottom to a longitudinal carriage (8), which slides on a base (9) parallel to the machining table (11), in such a way that each of the columns (2,3) has at least one of the wheelheads (4,5), the vertical and horizontal drives of the wheelheads (4,5) of each column (2,3) being independent of each other and the wheelheads (4,5) of each column (2,3) being able, therefore, to work simultaneously.

2. A grinding machine according to claim 1, **characterised in that** the columns (2,3) are facing each other.

3. A grinding machine according to claim 1, **characterised in that** the movement of the carriage (8) over the base (9) is effected by means of a hydrostatic slideway.

4. A grinding machine according to claim 1, **characterised in that** the longitudinal movement of the carriage (8) is governed by means of a rack and pinion and encoder system.
